# EUROPÄISCHE PATENTSCHRIFT

(11) **EP 0 835 749 B1**
(45) Veröffentlichungstag und Bekanntmachung des Hinweises auf die Patenterteilung: **11.08.2004**
(21) Anmeldenummer: 97810705.0
(22) Anmeldetag: 25.09.1997
(51) Int. Cl.: B32B 3/08, B32B 5/18, E04C 2/296

(54) **Mehrschichtigte Verbundplatte**
Multilayered composite plate
Plaque composite stratifiée

(30) Priorität: 09.10.1996 CH 246196
(43) Veröffentlichungstag der Anmeldung: 15.04.1998
(73) Patentinhaber: Alcan Technology & Management AG, 8212 Neuhausen am Rheinfall (CH)
(72) Erfinder: Röllin, Ulrich, 8048 Zürich (CH); Deubelbeiss, Urs, 5200 Windisch (CH)

(56) Entgegenhaltungen:
- EP-A- 0 324 282
- EP-A- 0 329 236
- WO-A-95/12043
- US-A- 3 367 076
- US-A- 3 583 118
- US-A- 4 712 352
- US-A- 4 754 587

## Beschreibung

Es sind Verbundplatten bekannt, enthaltend einen Kern, beispielsweise aus geschäumten Kunststoffen, und beidseitig des Kerns angeordneten Deckschichten, beispielsweise Platten, Tafeln oder Blechen aus Metall, Kunststoff, Holz oder Laminaten daraus. Der Kunststoff des Kerns kann z.B. aus Kunststoffen der Reihe des Polyurethans oder des Styrols sein. Zur Erzeugung des Kerns werden die Kunststoffe vorgeschäumt und granuliert oder die Kunststoffe fallen bereits aus dem Herstellungsprozess als granuliertes Schaummaterial an. Bei der Herstellung wird die erste Deckschicht in einer Form vorgelegt, wobei die Deckschicht mit den Seitenwänden bündig abschliesst. Mit der zweiten Deckschicht wird, an einer Halterung befestigt, in einem Abstand von der ersten Deckschicht, unter Ausbildung eines Hohlraumes oder Zwischenraumes zwischen den Platten, die Form nach oben verschlossen. Durch einen Einlass wird das Granulat aus Schaumstoff und fallweise eine über die Oberfläche des Granulates gleichmässig verteilte Klebemasse, in den Hohlraum eingefüllt. Nachdem sich das Granulat gleichmässig im Hohlraum verteilt hat, wird der Hohlraum, durch eine Bewegung der beiden Deckschichten gegeneinander, verkleinert und dabei, gegebenenfalls unter Wärmezufuhr, das Granulat aus Schaummaterial verdichtet und die einzelnen Granula gegeneinander resp. gegen die Deckschichten verklebt. Nach der Druckentlastung und gegebenenfalls einer Abkühlung wird der Kern in komprimiertem Zustande fixiert und die Verbundplatte erhält -zumindest annähernd -- ihre Enddicke. In den vielen Fällen ist es wünschenswert, zwischen den Deckschichten längs- oder querlaufende oder isolierte Zonen ohne Kernmaterial, d.h. ohne verdichtetes und gegenseitig verklebtes Schaummaterial zur Verfügung zu haben. Weiter ist es nachteilig, dass für jede Form einer Verbundplatte eine Vorform zur Verfügung stehen muss, in welche die Deckschichten randständig, bündig und dichtend eingeführt werden können. Damit wird vermieden, dass das Granulat während des Einfüllens oder Komprimierens seitlich zwischen den Deckschichten entweichen kann. Schliesslich weist die Verbundplatte einen Kern aus schaumförmigem Material auf, der bis an die seitliche Begrenzung reicht. Soll randständig zwischen den Deckschichten ein funktionelles Teil, wie ein Anschlussprofil angebracht werden, so ist zuerst durch randnahes Ausfräsen oder dergl. das schaumförmige Material wieder zu entfernen. Der entstandene Saum an den Deckschichten muss von den Klebestoffresten gereinigt werden, damit z.B. ein Anschluss-Profil entlang dem Saum festgelegt werden kann.

Aufgabe vorliegender Erfindung ist es, diese Nachteile zu vermeiden und mehrschichtige Verbundplatten vorzuschlagen, die auf einfache Weise hergestellt werden können und die randständige Profile, kernmateriallose isolierte Zonen und längs- und/oder querlaufende Profile enthalten können.

Erfindungsgemäss wird dies dadurch erreicht, dass die Deckschichten (10, 11) der Verbundplatte eine untere (10) und eine obere (11) Deckschicht sind und jede der Deckschichten (10, 11), jeweils auf der dem Kern (12) zugewandten Seite, einander gegenüberliegend, Profile (15, 16) enthält, die jeweils wenigstens einen, in einem Winkel von der Deckschicht abragenden, Profilsteg (315, 316) aufweisen und
- wobei jeder der Profilstege (315) wenigstens eine Seitenfläche (215), die einer Seitenfläche (216) des anderen Profilstegs (316) gegenüberliegt, aufweist, und die Seitenflächen (215, 216) in geringem Abstand, unter Ausbildung eines Spaltes, voneinander angeordnet sind, oder
- dass die beiden Profilstege (237, 238) einander gegenüberliegen und ein drittes bewegliches Element (39) den Abstand zwischen den Profilstegen (237, 238) überbrückt oder
- die beiden Profilstege (171, 172) durch ein drittes flexibles Element (73) über ihre ganze Länge spaltlos miteinander verbunden sind,
und die Profile die seitlichen Begrenzungen des schaumförmigen Kernmaterials sind und/oder isolierte Zonen ohne schaumförmiges Kernmaterial begrenzen.

Die Profilstege oder Profillappen ragen in einem Winkel, vorzugsweise senkrecht, d.h. in einem rechten Winkel, von der Oberfläche der jeweiligen Deckschicht ab.

Verbundplatten nach vorliegender Erfindung können eine untere und eine obere Deckschicht, beispielsweise Platte oder Tafeln aus Kunststoff oder Holz, Platte oder Bleche aus Metall oder mehrschichtige Platten, beispielsweise aus verschiedenen Metall-, Holz- und/oder Kunststoffschichten, sein.

Beispielsweise bei einer rechteckigen Verbundplatte kann die untere und die obere Deckschicht randständig an einem, zwei, drei oder an allen vier Seitenrändern ein Profil oder verschiedene Profile aufweisen. Die Profile können beispielsweise aus Metall oder Kunststoff oder Kombinationen davon sein. Die Profile können je nach Material durch spanabhebende Bearbeitung, durch Spritzguss, Druckguss, Strangpressen, Walzen usw. hergestellt werden. Metallprofile können z.B. aus Eisen, Stahl, Messing, Aluminium, Kupfer, Magnesium usw. sein, Kunststoffprofile können z.B. aus Polyvinylchloriden, Polycarbonaten, Polyolefinen, Acrylnitril, Acrylnitril-Styrol, Acrylnitril-Butadien-Styrol, Polyamiden usw. sein. Die Kunststoffe können durch metallische Einlagen oder durch Armierungsstoffe, wie Fasern, Gewebe, Gewirke usw. aus Metallen, Kohlenstoff, natürlichen Fasern, wie z.B. Baumwolle, Kunststoffen, wie z.B. Polyamiden, verstärkt sein. Sinngemäss können polygonale, nicht in Rechteckform gestaltete Verbundplatten oder runde oder ovale Verbundplatten erzeugt werden. Die Profile sind über eine Auflagefläche trennfest mit der unteren resp. der oberen Deckschicht verbunden, beispielsweise durch Kleben, Nieten, Schrauben, Schweissen, wie MIG-, TIGoder Laserschweissen, Punktschweissen usw. In einem Winkel, vorzugsweise senkrecht, zur Deckschicht und Auflagefläche ragt wenigstens ein Profilsteg von den Profilen ab. Der Winkel, in dem der Profilsteg von der einen Deckschicht abragt, ist kongruent dem Winkel des Profilstegs der anderen Deckschicht.

Werden die Deckschichten in die Verarbeitungslage gebracht, weisen die Profile zueinander und die Profilstege sind dergestalt geformt und angeordnet, dass wenigstens je eine Seitenfläche jedes Profilstegs einen Spalt ausbilden. Dieser Spalt kann beispielsweise eine Weite bis zu 3 mm, zweckmässig von 0,1 bis 3 mm, vorzugsweise 0,5 bis 1,5 mm und insbesondere eine Weite von 1 mm aufweisen.

Das Kernmaterial in Granulatform wird beispielsweise auf der unteren Deckschicht aufgehäuft und die obere Deckschicht in die Verarbeitungslage gebracht oder -- nach einem weiteren Verfahren -- die untere und die obere Deckschicht werden in Verarbeitungslage gebracht und durch eine dafür vorgesehene Öffnung wird das Kernmaterial zwischen die Deckschichten, beispielsweise durch Einblasen, gebracht. Anschliessend werden unter Druck, und im Regelfalle unter gleichzeitiger Temperaturerhöhung, die beiden Deckschichten gegeneinander gepresst. Das Kernmaterial, beispielsweise Granula aus aufgeschäumten Kunststoffen, wie Polystyrol, Polyurethanen, Polyvinylchlorid, Polyolefinen, wie z.B. Polyethylenen oder Polypropylenen. Das Kernmaterial ist vorteilhaft mit einem z.B. physikalisch oder chemisch abbindenden Klebstoff, der beispielsweise ohne Abspaltung flüchtiger Bestandteile oder unter Abspaltung flüchtiger Bestandteile abbindet, und lösungsmittelhaltig oder lösungsmittelfrei sein kann und beipielsweise aus der Reihe der Ein- und Zweikomponentenklebstoffe, z.B. auf Urethan-, Vinylacetat- oder Epoxydbasis, ausgewählt werden kann, vermischt. Dadurch sind die einzelnen Granulen, zumindest teilweise, mit einer Klebstoffschicht umhüllt. Der mittlere Durchmesser der einzelnen Granulen kann beispielsweise 0,5 bis 10 mm, zweckmässig 1 bis 5 mm, betragen. Zusätzlich können die Deckschichten auf der dem Kern zugewandten Seite mit einer Klebstoffschicht, wie einer Klebefolie oder einem Klebstoff-Film, ausgerüstet sein.

Die Klebstoffe sind beispielsweise physikalisch abbindende Klebstoffe, wie Haftkleber, Kontaktkleber oder Schmelzkleber, oder chemisch reagierende Klebstoffe, wie Polymerisate und Polyaddukte oder Polykondensate.

Mit dem Verpressen verkleinert sich der Abstand zwischen den Deckschichten, während das Kernmaterial komprimiert und kompaktiert wird und die Granulen gleichzeitig eine feste Schaummasse bilden, die trennfest mit den Deckschichten verbunden ist. Nach der Druckentlastung und einem allfälligen Abkühlen behält die geformte Verbundplatte im wesentlichen die ihr aufgezwungene Dicke. Es ist möglich, dass die Verbundplatten nach der Druckentlastung durch Rückfedern um einen kleinen Prozentsatz in ihrer Dicke zunehmen.

Die Verdichtungsrate oder das Verdichtungsverhältnis kann beispielsweise von etwa 3.1, zweckmässig 2:1, bis 1,2:1 betragen, d.h. das Kernmaterial wird im Maximalfall auf einen Drittel, zweckmässig auf die Hälfte seiner ursprünglichen Höhe bis im Minimalfall um ca. 17 % seiner ursprünglichen Dicke verdichtet.

Während des Einfüllens des Kernmaterials und des anschliessenden Verdichtens verhindern die kammartig aneinander stehenden und beim Verdichten aneinander vorbei gleitenden Seitenflächen der Profilstege ein seitliches Austreten von Kernmaterial. Damit kann in der Regel auf eine Vorform deren Begrenzungen genau dem Umriss der beiden Deckschichten entspricht, verzichtet werden. Falls nicht alle Seitenkanten oder nicht der ganze Umfang einer Deckschicht durch Profile besäumt sind, ist die Anwendung einer Vorform, welche die unbesäumten Seitenkanten dichtend abschliesst, vorteilhaft.

Die Profile können auch in einem Abstand von den Rändern der Deckschichten angeordnet werden. Zwischen je zwei Profilen an oberer und unterer Deckschicht oder zwischen je einem Profil in U-Form an oberer und unterer Deckschicht können längs- oder querlaufende kernmaterialfreie Zonen in der Verbundplatte geschaffen werden. Durch die Anwendung von endlosen Profilen, beispielsweise in der Draufsicht runder, ovaler oder polygonaler Form können ebenfalls isolierte, kernmaterialfreie Zonen in den Verbundplatten erzeugt werden.

Erfindungsgemässe mehrschichtige Verbundplatten weisen beispielsweise Profile mit Profilstegen auf, deren einander gegenüberliegende Seitenflächen in einem Abstand angeordnet sind, unter Ausbildung eines Spaltes zwischen den Seitenflächen von bis zu 3 mm, zweckmässig 0,1 bis 3 mm und vorteilhaft 0,5 bis 1,5 mm.

An den vorliegenden mehrschichtigen Verbundplatten können die Profilstege von einander gegenüberliegenden Profilen kammartig ineinander greifen.

Bei anderen Ausführungsformen von mehrschichtigen Verbundplatten sind die Profilstege beider einander gegenüberliegender Profile beispielsweise durch ein drittes flexibles Element in Form eines elastischen Verbindungselementes spaltlos miteinander verbunden.

Bei weiteren Formen von mehrschichtigen Verbundplatten nach der Erfindung kann wenigstens eines der beiden einander gegenüberliegenden Profile ein funktionelles Profil sein oder beide Profile bilden ein funktionelles Randprofil.

An den mehrschichtigen Verbundplatten kann das funktionelle Profil und dabei insbesondere das funktionelle Randprofil eine Nut, eine hinterschnittene Nut, eine hinterschnittene Nut, wobei querschnittlich keilförmige Profilstreifen die Hinterschneidung bilden, eine Bohrung oder ein Scharnierteil aufweisen.

An den mehrschichtigen Verbundplatten können beide Profile gemeinsam in Endlage eine Nut oder Feder darstellen, eine gegenseitige Schnappverbindung sein oder eine Bohrung ausbilden. Weist eine derartige Verbundplatte an wenigstens einer Seitenkante ein nutenförmiges Profil und an einer angrenzenden und/oder gegenüberliegenden Seitenkante ein federförmiges Profil auf, so kann durch Fügen durch einer Mehrzahl von Verbundplatten grossflächige Abdeckungen geschaffen werden, deren einzelnen Verbundplatten vertikal nicht gegeneinander verschoben werden können.

Bei den erfindungsgemässen mehrschichtigen Verbundplatten kann an wenigstens einer Seitenkante der Verbundplatte an den Deckschichten, einander gegenüberliegend, Profile angeordnet sein und die beiden Profile formen gemeinsam eine randständige Nut, eine randständige hinterschnittene Nut oder eine randständige hinterschnittene Nut, wobei querschnittlich keilförmige Proftlslreifen die Hinterschneidung bilden.

Anhand der Figuren 1 bis 34 werden beispielhaft verschieden randständig oder im Innern der Verbundplatte angeordnete Profilpaare gezeigt.

Die Figuren 1 bis 26 zeigen jeweils einen Schnitt durch den Randbereich einer erfindungsgemässen Verbundplatte. Die Figuren 10 und 26 zeigen zusätzlich eine zweite Verbundplatte mit einem der ersten Verbundplatte angepassten funktionellen Profil.

Die Figuren 27 und 28 zeigen verschiedene innerhalb der Verbundplatte angeordnete Profile.

Die Figur 29 zeigt eine Ansicht einer Verbundplatte mit verschiedenen randständigen Profilen.

Die Figuren 30 bis 33 zeigen verschiedene Formen des Anbringens der randständigen Profile und in Figur 33 wird zusätzlich die Anordnung von Einlageprofilen gezeigt.

Die Figur 34 zeigt die schematische Ansicht einer Verbundplatte mit einem mittig angeordneten Einlageprofilen

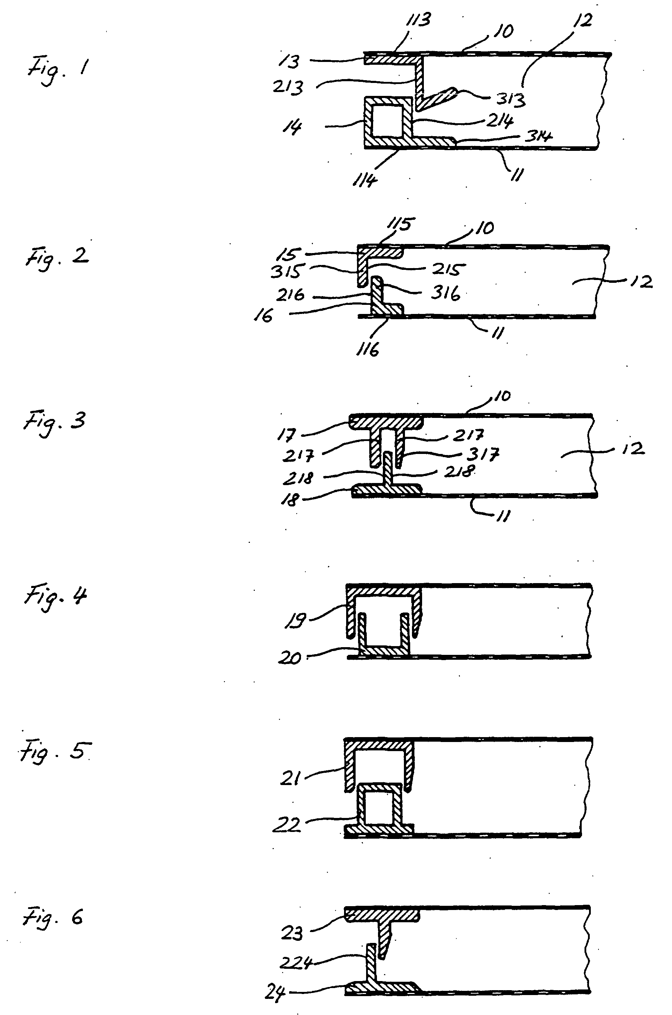

Die Figur 1 zeigt einen Schnitt durch eine Verbundplatte mit der oberen Deckschicht 10 der unteren Deckschicht 11 und dem Kern 12. Am Rande der oberen Deckschicht 10 ist ein Z-förmiges Profil 13 festgelegt und randständig an der unteren Deckschicht 11 ist ein Hohlprofil 14 festgelegt. Das Profil 13 weist eine Auflagefläche 113 auf, über die das Profil 13 mit der oberen Deckschicht 10 trennfest verbunden ist. Desgleichen ist das Profil 14 über die Auflagefläche 114 mit der unteren Deckschicht 11 verbunden. Das Profil 13 weist einen Profilsteg mit einer Seitenfläche 213 auf und das Profil 14 weist einen Profilsteg mit einer Seitenfläche 214 auf. In der Verarbeitungslage, wie auch in der Endlage nach dem Verpressen der unteren Deckschicht 11 und der oberen Deckschicht 10 zum Kompaktieren des Kernes 12, weisen die Seitenflächen 213, 214 nur ein geringes Spaltmass von beispielsweise bis zu 3 mm auf. Wird das granulierte Kernmaterial in der Verarbeitungsstellung zwischen die beiden Deckschichten gegeben und der Verpressungsvorgang eingeleitet, ist es dem granulierten Kernmaterial nicht möglich, durch das geringe Spaltmass nach aussen zu treten. Das Kernmaterial kann dem Druck nur noch durch Verdichten ausweichen. Die Verdichtung kann soweit geführt werden, bis sich die Profile 13 und 14 oder Profilteile davon berühren. Spätestens dann ist der Verdichtungsvorgang abgeschlossen. An den Profilen 13, 14 sind die nach innen weisenden Kanten 313, 314 vorteilhaft gerundet. Damit kann das Granulat die Kanten leicht umströmen und es können sich keine Kernmaterial-freien Nester bilden. Sinngemäss können bei allen Profilformen, wie bei den nachfolgend beschriebenen Profilen, die Kanten gerundet sein. Die Profile 13 und 14, welche sich insbesondere über die ganze Seitenlänge der Verbundplatte erstrecken, verhindern nicht nur ein Austritt von Kernmaterial während des Verpressungsvorganges, sondern stellen Mittel zur direkten Krafteinleitung in die Sandwichplatte dar. Insbesondere kann bei punktueller Krafteinleitung in die Verbundplatte oder in die randständigen Profile der Kraftfluss auf die ganze Verbundplatte verteilt werden.

Die Figur 2 zeigt eine weitere Ausführungsform von randständigen Profilen. Am Rand der oberen Deckschicht 10 ist ein L-förmiges Profil 15 und im Randbereich der unteren Deckschicht 11 ein L-förmiges Profil 16 angeordnet. Ein Schenkel des Profiles 15 ist über die Auflagefläche 115 mit der oberen Deckschicht 10 trennfest verbunden und ein Schenkel des Profiles 16 ist über die Auflagefläche 116 mit der unteren Deckschicht 11 trennfest verbunden. Die Seitenfläche 215 des Profilsteges 315 am Profil 15 und die Seitenfläche 216 des Profilsteges 316 des Profiles 16 sind in geringem Spaltmass voneinander angeordnet oder können auch gleitend aneinander angeordnet sein, wobei das Spaltmass wieder derart gering ist, dass kein Kernmaterial 12 während des Verpressens von unterer und oberer Deckschicht gegeneinander zwischen den beiden Seitenflächen 215, 216 durchtreten kann. Der senkrecht von der Deckschicht abragende Profilsteg 315 oder Schenkel des Profiles 15 kann so lang gewählt werden, dass in Endlage, nach dem Verpressen, die Spitze des Profilsteges 315, d.h. des senkrecht abragenden Schenkels, einen vorstehenden Teil der unteren Deckschicht 11 berührt und somit ein völlig glatter Randabschluss oder Eckbereich an der Verbundplatte erzeugt wird.

Die Figur 3 zeigt eine weitere Ausführungsform eines randständigen Profiles. Wie in den beiden vorhergehenden Beispielen ist das Profil 17 und das Profil 18 jeweils über ihre Auflagefläche trennfest mit der oberen Deckschicht 10 resp. der unteren Deckschicht 11 verbunden. Das Profil 17 bildet durch zwei senkrecht von der Deckfläche abstehende Profilstege eine Nut aus, in welche ein senkrecht abstehender Profilsteg am Profil 18 eingreifen kann. Entsprechend dem geringen Spaltmass zwischen den Seitenflächen 217 und 218 kann wiederum während des Verpressens kein Kernmaterial 12 austreten. In der Endlage bilden die Profile 17 und 18 eine im wesentlichen form- und kraftschlüssige Verbindung und es wird somit eine Verbundplatte höchster Stabilität geschaffen. Damit das Kernmaterial die nach innen weisenden Profilteile leicht umströmen kann und sich keine kernmaterialfreien Nester bilden, kann die nach innen weisende Seite der Profilsteg eine Abschrägung 317 aufweisen. Entsprechende Abschrägungen können sinngemäss bei allen anderen Profilen ebenfalls vorgesehen werden.

Das Beispiel 4 und 5 zeigen Randprofile 19 und 20 in beidseitiger U-Form, resp. Randprofil 21 in U-Form, welches ein Hohlprofil 22 übergreift. Die einander gegenüberstehenden Seitenflächen zwischen den Profilen 19 und 20 resp. 21 und 22 verhindern wiederum sicher den Durchtritt von Kernmaterial während des Verpressens. In der Endlage, insbesondere wenn die Schenkel des übergreifenden Profiles in Berührung mit der gegenüberliegenden Deckschicht oder Vorsprüngen des gegenüberliegenden Profiles sind, wird eine äusserst solide Konstruktion einer Verbundplatte erhalten.

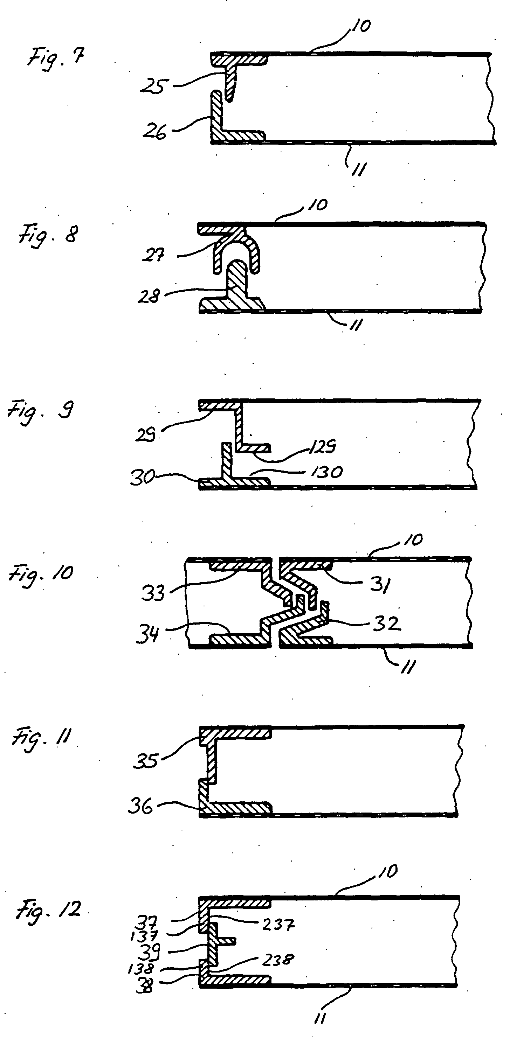

Die Figur 6 zeigt eine Verbundplatte in Verarbeitungslage mit zwei T-förmigen Profilen 23, 24. In Endlage stösst der senkrecht an der unteren Deckschicht 11 abragende Profilsteg 224 gegen das Profil 23. In Endlage der beiden Deckschichten bildet sich somit eine Verbundplatte mit einer randständigen Nut aus, welche weitere Funktionen ermöglicht.

In Figur 7 ist eine obere Deckplatte 10 und eine untere Deckplatte 11 erkennbar. An der oberen Deckplatte 10 ist ein T-förmiges Profil 25 festgelegt, während an der unteren Deckplatte 10 ein L-förmiges Profil 26 gezeigt ist. Beim Zusammenpressen der beiden Deckplatten 10, 11 schliesst das freie Ende des L-förmigen Profils bündig mit dem horizontalen Schenkel des T-förmigen Profils 25 ab und eine derartige Verbundplatte weist eine glatte, mit dem Rand der Deckschichten abschliessende, Profilaussenseite auf.

Die Figur 8 zeigt ein U-förmiges oder gabelförmiges Profil 27, welches an der oberen Deckplatte 10 festgelegt ist und in die Nut des Profiles 27 greift ein senkrecht vom Profil 28 resp. der Deckplatte 11 abragender Profilteil. Nach dem Verpressen der oberen und unteren Deckplatte 10, 11 können die abragenden Teile der Profile 27, 28 formschlüssig ineinandergreifen.

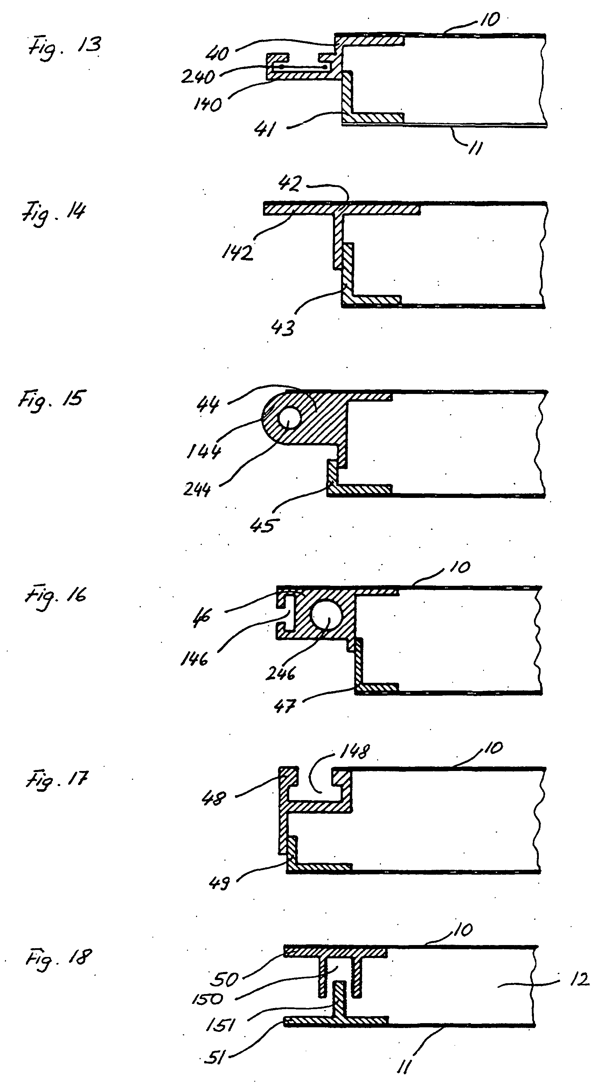

Die Figur 9 zeigt eine weitere Variante von randständigen Profilen 29, 30. In Endlage kann die horizontale Fläche 129 des Profiles 29 und die horizontale Fläche 130 des Profiles 30 in Berührung stehen und es können fallweise ein- oder beidseitig Klebstoffe aufgetragen sein, welche bei gegenseitigem Kontakt eine Klebeverbindung ausbilden.

Die Figur 10 zeigt eine obere Deckschicht 10 und eine untere Deckschicht 11, die mit einem Profil 31, resp. 32, verbunden sind. In Endlage bilden die Profile 31 und 32 eine Nut aus. Eine weitere Verbundplatte weist an wenigstens einer Seitenkante Profile 33 und 34 auf, welche in Endlage eine Feder bilden. Die Feder passt, vorzugsweise formschlüssig, in die durch die Profile 31 und 32 gebildete Nut. Weist nun die erste Verbundplatte an einer Seitenkante die Profile 31, 32 auf und an der gegenüberliegenden Seitenkante die Profile 33, 34 auf, so können die Platten zu einem grösseren Gebilde gefügt werden, wobei sich die Verbundplatten zentrieren und einen vertikal zur Plattenebene unverrückbaren Plattenstoss ausbilden.

In Figur 11 ist eine weitere Variante von Profilen 35, 36 gezeigt.

Die Figur 12 zeigt eine Variante einer Verbundplatte, wiederum mit den Deckschichten 10 und 11, wobei zwei, beispielsweise symmetrische, Profile 37, resp. 38, an den entsprechenden Deckschichten trennfest angebracht sind. Im Bereich der senkrecht von den Deckschichten abragenden Schenkel der Profile 37, 38 ist eine Einsatzleiste oder ein Einsatzprofil 39 vorgesehen. Statt dass sich, wie in den vorbeschriebenen Fällen, die abragenden Profilstege, resp. Schenkel, von den Profilen übergreifen, laufen die abragenden Profilschenkel, resp. Schenkel, der beiden Profile aufeinander zu, wobei die Abdichtfunktion während des Verpressens durch die Einsatzleiste oder das Einsatzprofil 39 übernommen wird.

Die Figur 13 zeigt ein Profil 41, welches an der unteren Deckschicht 11 angebracht ist und beispielsweise einen L-förmigen Querschnitt aufweisen. Das gegenüberliegende Profil 40, welches an der Deckschicht 10 festgelegt ist, ist ein funktionelles Profil mit einer Profilleiste 140, die zu einer hinterschnittenen Nut 240 ausgeformt ist. Nach dem Verpressen, in Endlage, weist die Verbundplatte einen funktionellen Teil oder einen funktionellen Profilteil 40, 140, 240 auf. Beispielsweise kann an einer solchen Verbundplatte mittels Klemmplättchen oder Gegenmuttern und dergleichen am Profilteil 140 weitere funktionelle Teile, wie andere Verbundplatten, anschmiegende Profile, abragende Profile usw. festgelegt werden. Solche Verbundplatten können auch als Verkleidungsplatten beispielsweise in eine Rahmen- oder Gitterstruktur eingefügt und daran festgelegt werden.

In Figur 14 ist eine weitere Verbundplatte gezeigt, welche ein Profil 42 in T-Form und ein Profil 43 in L-Form aufweist. Die Funktion der Profile 42 und 43 bei der Herstellung der Verbundplatte ist die bereits erwähnte. Der eine Schenkel 142 des Profiles 42 kann beispielsweise so gross gewählt werden, dass beim Einfügen der Verbundplatte, z.B. als Verkleidungsteil, in eine Rahmen- oder Gitterrahmenkonstruktion, Anschlüsse oder Trennfugen durch den Schenkel 142 abgedeckt werden.

Die Figur 15 zeigt ein L-förmiges Profil 45, dessen senkrecht von der Deckfläche abragender Profilsteg eine Seitenfläche aufweist, die einer Seitenfläche des Profilsteges von Profil 44 gegenüberliegt. Dies verhindert beim Verpressen der beiden Deckschichten wiederum, wie schon weiter oben beschrieben, den Austritt von Kernmaterial. Das Profil 44 weist jedoch zusätzlich ein Ansatzstück 144 auf, wobei dieses Ansatzstück 144 an seinem äusseren Ende mit einer Halbrundung abschliesst. Im Bereich dieser Halbrundung ist eine Bohrung 244 angeordnet. Das Ansatzstück 144 kann durchgehend sein, d.h. sich über die ganze Länge des Profiles erstrecken und durch die Bohrung 144 kann beispielsweise eine Achse gesteckt werden, an deren hervorstehenden Enden weitere funktionelle Teile, wie das Widerlager Scharniers, angeordnet werden können. Beispielsweise kann mit einer Scharnierachse und einem Widerlager eine um die Achse in der Bohrung 144 drehbare Türe, Deckel, Klappe usw. geschaffen werden. Das Ansatzstück 144 kann regeimässig oder unregelmässig Ausnehmungen oder über dessen Länge, Unterbrüche aufweisen. Mit einem weiteren Profil 44, welches passgenau in die Ausnehmungen innerhalb des Ansatzes 144 greift und einer innerhalb der Bohrung 244 angeordneten Achse, kann -- im Sinne eines Klavierbandes -- ein Scharnier geschaffen werden. Ist an einer Verbundplatte, beispielsweise an zwei gegenüberliegenden Längskanten ein solches Profil 44, welches klavierbandmässig ausgearbeitet ist, vorhanden, kann beispielsweise durch das Zusammenfügen von zwei und insbesondere einer Vielzahl von Verbundplatten, beispielsweise ein rollbares Tor, harmonikaartig faltbare Trennwände oder Türen oder dergleichen geschaffen werden.

Die Figur 16 zeigt eine weitere Variante eines funtionellen Profils 46 an der oberen Deckschicht 10 einer Verbundplatte, wobei ein L-förmiges Profil 47 dem Profil 46 gegenüberliegt. Das Profil 46 weist beispielhaft sowohl eine hinterschnittene Nut 146, wie auch eine Bohrung 246 auf.

In anderer Ausgestaltung kann eine Verbundplatte beispielsweise wiederum ein L-förmiges Profil 49 und gegenüberliegend ein Profil 48, welches eine gegen die Fläche der Deckplatte 10 weisende, hinterschnittene Nut 148 aufweist, geschaffen werden. Durch Verbindungen mit Schrauben und Klemmplättchen oder Schrauben und Muttern und dergleichen können an der hinterschnittenen Nut und somit an der Verbundplatte weitere funktionelle Teile befestigt werden.

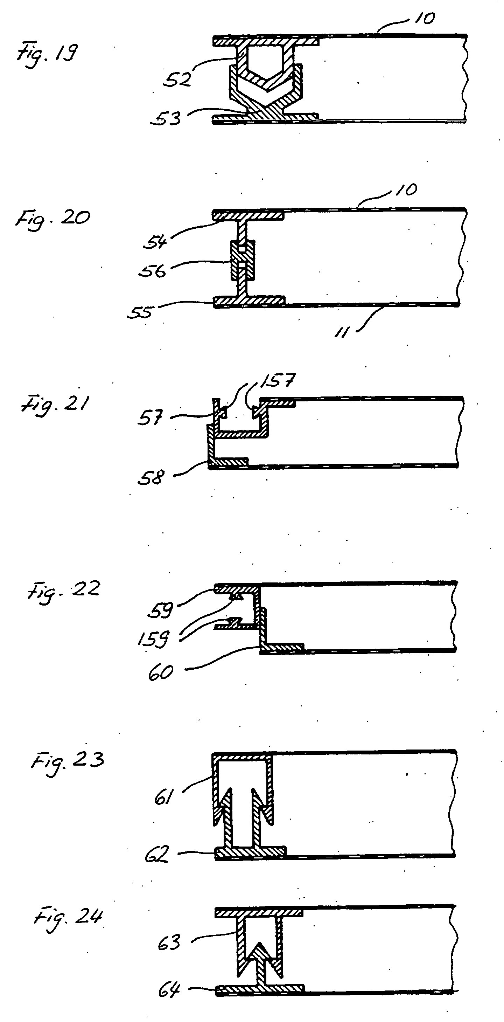

Die Figur 18 zeigt eine weitere Variante einer Verbundplatte, die an einer Deckschicht ein Profil 50 mit einer Nut und an der anderen Deckschicht ein Profil 51 in T-Form aufweist. Die inneren Seitenflächen der Nut 150, wie auch die Seitenflächen des senkrecht von der Deckschicht abragenden Profilsteges 151 des Profiles 51 ist mit einem Rauhigkeitsmuster, einer Zahnung, einem Sägezahn oder dergleichen versehen. Beim Fügen der oberen Deckschicht 10 und der unteren Deckschicht 11 und anschliessendem Verpressen des Kernmaterials 12 greift der abragende Profilsteg 151 des Profiles 51 in die Nut 150 des Profiles 50 und durch das Rauhigkeitsmuster und insbesondere durch eine einklinkende oder einrastende Verzahnung ist ein Rückfedern oder Spreizen der beiden Deckschichten 10, 11 nicht mehr möglich.

In Figur 19 ist eine Verbundplatte gezeigt, mit einem Profil 52, wobei ein hohlkammerförmiger Teil des Profils 52 einen Keil bildet, der von der Deckschicht 10 abragt und formschlüssig in eine Nut eines Profiles 53 eingreift.

Die Figur 20 zeigt eine Verbundplatte mit einem T-förmigen Profil 54 an der oberen Deckschicht 10 und einem T-förmigen Profili 55 an der unteren Deckschicht 11. Die beiden abragenden Arme oder Profilstege der Profile 54, 55 sind einander genau gegenüber angeordnet und eine H-förmige Leiste oder Profil 56 ist zwischen den beiden Profilen 54, 55 angeordnet. Die abragenden Profilstege der Profile 54, 55 werden von den beiden Nuten des H-förmigen Profiles 56 aufgenommen. Das H-förmige Profil 56 kann beispielsweise auch aus wenig leitendem Material, wie z.B. Kunststoff, geformt sein und es gelingt dabei, isolierende Verbundplatten herzustellen, welche keine Wärmebrücken aufweisen.

Die Figuren 21 und 22 zeigen Verbundplatten mit Profilen in L-Form 58, 60 und Profilen 57, 59, welche eine hinterschnittene Nut aufweisen. Die hinterschnittene Nut in den Profilen 57, 59 wird durch Profilleisten 157, 159 gebildet. Die Profilleisten 157, 159 haben einen keilfönnigen Querschnitt. Es gelingt damit mit entsprechenden Klemmplättchen oder Klemmleisten mit kongruenter, keilförmiger Auflagefläche selbstzentrierende Verbindungen zu weiteren funktionellen Teilen zu schaffen.

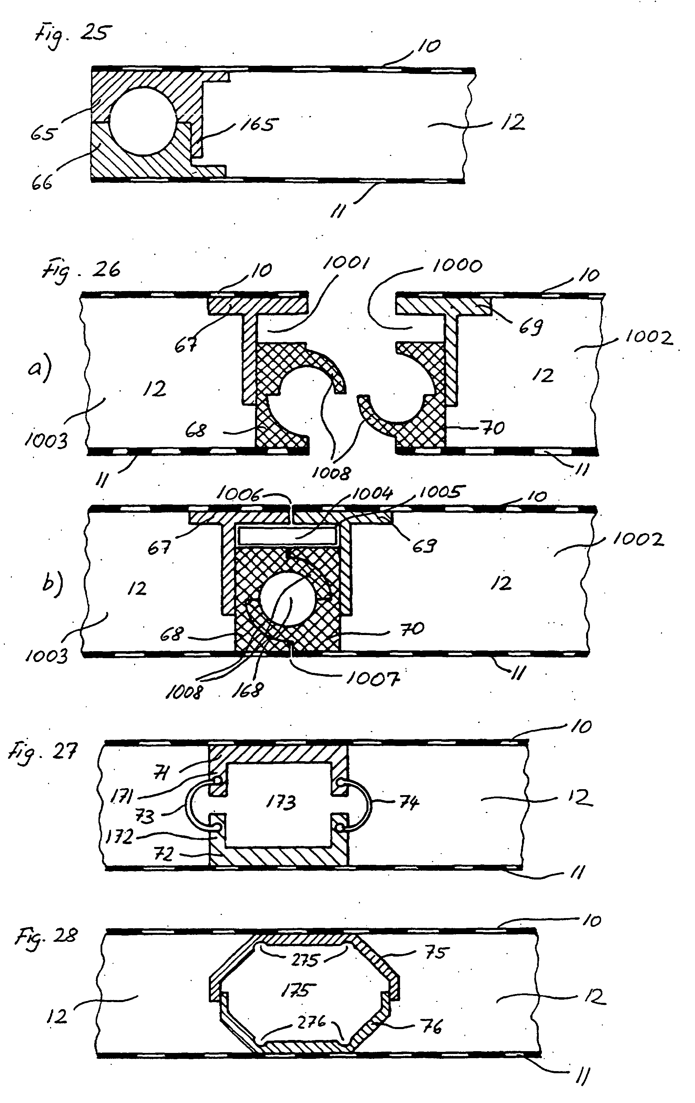

Die Figuren 23 und 24 zeigen Verbundplatten mit verschiedenen Profilen 61, 62 und 63, 64, welche eine Schnappverbindung ausbilden.

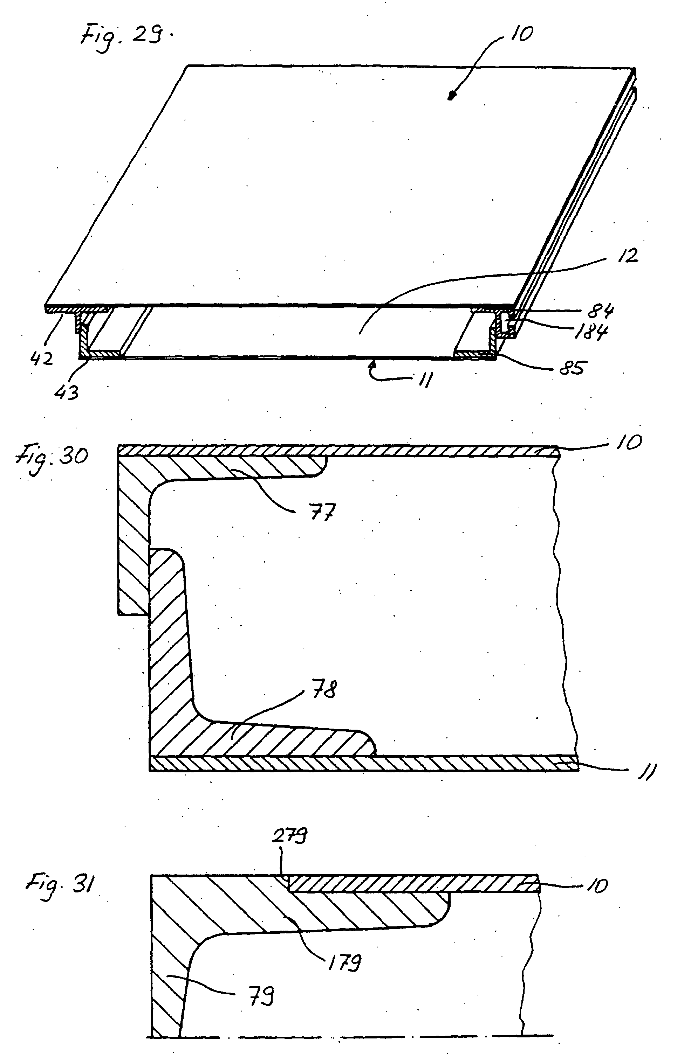

Die Figur 25 zeigt eine Verbundplatte mit zwei Profilen 65, 66 festgelegt an der oberen Deckschicht 10 resp. unteren Deckschicht 11. Das Profil 65 enthält an der nach unten weisenden Begrenzung des Profilsteges eine halbkreisförmige Nut und weist eine senkrecht von der Verbundplatte 10 abstehende Verlängerung 165 am Profilsteg auf, welcher insbesondere die Verschliessfunktion für das Kernmaterial 12 während des Verpressens zukommt. Das Profil 66 enthält an der nach oben weisenden Begrenzung des Profilsteges ebenfalls eine halbkreisförmige Nut auf. In verpresstem Zustand weist die Verbundplatte ein Randprofil auf, gebildet aus den Einzelprofilen 65, 66. Innerhalb des Randprofiles hat sich eine Bohrung gebildet, welche von einer Achse durchsetzt werden kann.

In den Figuren 26 a) und b) ist eine Profilkonstruktion gezeigt, welche es ermöglicht, zwei Verbundplatten aus oberer Deckschicht 10, unterer Deckschicht 11 und Kernmaterial 12 mit ihren Seitenflächen aneinanderstossend zu fügen und gegenseitig aneinander festzulegen. An den oberen Deckschichten 10 von zwei Verbundplatten sind T-förmige Profile 67, 69 festgelegt. An den unteren Deckschichten 11 sind die Profile 68, 70 festgelegt. Die Protile 67 und 68, resp. 69 und 70, verhindern durch einander jeweils gegenüberliegende Seitenflächen den Durchtritt von Kernmaterial während des Verpressens, während sich in Endlage und beim Zusammenschieben von Plattenstoss gegen Plattenstoss sich in den Profilen 68 und 70 eine Bohrung 168 ausbildet. In die Bohrung 168 kann eine Wendelfeder eingefügt werden. Danach sind die beiden aneinander stossenden Platten trennfest, jedoch durch Entfernen der Wendelfeder wieder lösbar miteinander verbunden.

In Figur 26 b) ist an den aneinanderstossenden Stirnseiten der beiden Verbundplatten 1002, 1003 durch die Profile 67, 68, resp. die Profile 69, 70, je eine Nut 1000, 1001 geformt. Beim Verpressen der Deckschichten 10, 11 verkleinern sich die Abstände zwischen den Profilen 67, 68, resp. 69,70 und es wurden dadurch die Nuten 1000, 1001 gebildet. Die Weite der Nuten 1000, 1001 richtet sich nach dem Verdichtungsgrad des Kernmaterials 12 und nach den Profilabmessungen. In den sich bildenden Hohlraum aus den Nuten 1000 und 1001 kann ein Keilstück 1004 eingelegt werden. Das Keilstück 1004 kann von einem Klebstoff 1005 allseitig umgeben sein. Werden die Verbundplatten 1002 und 1003 nun zur Gestaltung eines Bauteils aneinandergefügt, füllt das Keilstück 1004 und der Klebstoff 1005 den Hohlraum aus. Dadurch entsteht ein direkter Kraftfluss von den Profilen 67, 69 in die oberen Deckschichten 10. Bekanntlich benötigen Klebeverbindungen eine gewisse Aushärtungszeit. Durch die Profile 68, 70 und dabei insbesondere über die Profilsteg 1008, sowie einer Wendelfeder, wird unmittelbar eine mechanische Verbindung hergestellt. Sobald der Klebstoff 1005 vollständig ausgehärtet ist, kann eine maximale Belastung des gebildeten Bauteiles erfolgen. In einem derartigen Bauteil sind die Unterbrüche 1006, 1007 in den beiden Deckschichten 10, 11 Schwachpunkte und durch die Verbindung der Verbundplatten über die Profile 68, 70. sowie auch über die Profile 67, 69 und dem Keilstück 1004 mit dem Klebstoff 1005 kann dieser Nachteil überwunden werden.

Die Figur 27 zeigt zwei innerhalb einer Verbundplatte, aus oberer Deckschicht 10 und unterer Deckschicht 11 und dazwischenliegendem Kernmaterial 12, beispielsweise zwischen den Deckschichten 10, 12 längs oder quer laufende Profile 71, 72. Die Profile 71, 72 sind einander gegenüberliegend angeordnet und beide U-förmig. Die abragenden Profilstege oder Schenkel des Profiles 71 sind mit den abragenden Profilstegen oder Schenkeln des Profiles 72 über elastische Elemente 73, 74 verbunden. Die elastischen Elemente können z.B. federnde Bleche aus Metall oder vorteilhaft Schlauchhälften aus elastischen Kunststoffen, wie Polymerisaten, oder Gummi, Latex usw. sein. Zur Befestigung der elastischen Elemente an den abragenden Profilstegen der Profile können beispielsweise Nuten vorgesehen werden, in welche die Ränder der elastischen Elemente eingeschoben werden. Anstelle des abgebildeten elastischen Elementes können auch zwischen den Stirnflächen der abragenden Profilstege der U-förmigen Profile 71, 72 elastische oder quetschbare Elemente, wie Schläuche, Vollschaumstoffschläuche oder dergl. angeordnet sein. Die Zone 173 zwischen den Profilstegen oder Schenkeln der U-Profile 71, 72 bleibt kernmaterialfrei und kann für weitere funktionelle Zwecke verwendet werden, wie z.B. zum Durchführen von Kabel- oder Schlauchverbindungen, zum Durchleiten von Flüssigkeiten oder Gasen usw. Die U-förmigen Profile bilden gleichzeitig eine Verstärkung innerhalb der Verbundplatte und können z.B. als Befestigungspunkt zur Einleitung von Kräften in die Verbundplatte vorgesehen werden. Das Profilpaar 71, 72 kann auch randständig angeordnet werden, wobei das aussenliegende resp. randständige elastische Element dann ohne Funktion ist und auch weggelassen werden kann.

Die Figur 28 zeigt ein weiteres Profilpaar 75, 76, das innerhalb der Verbundplatte oder randständig angeordnet werden können. Zwischen den Profilen 75 und 76 wird eine kemmaterialfreie Zone 175 gebildet. Weist das Profil 75 und 76 eine in der Draufsicht runde Form aus, d.h. eine Glocken- oder Dosenform, kann eine örtliche Einlage oder isolierte, insbesondere kernmaterialfreie, Zone zwischen den Deckplatten 10, 11 geschaffen werden. Die Nuten 275, 276 in den Profilen 75, 76 ermöglichen eine Verformung, d.h. Spreizung der Profile 75, 76, z.B. zum Dickenausgleich beim Verpressen der Deckschichten 10, 11 zur Verbundplatte mit dem Kernmaterial 12.

Die Figur 29 zeigt eine Ansicht einer erfindungsgemässen Verbundplatte mit der oberen Deckschicht 10 und der unteren Deckschicht 11 und dem dazwischen angeordneten Kemmaterial 12. Beispielhaft sind auf einer Schmalseite der Verbundplatte die Profile 42, 43 gemäss Figur 14 und auf der gegenüberliegenden Schmalseite der Verbundplatte ein L-förmiges Profil 85 und ein L-förmiges Profil 85 mit angeformter, hinterschnittener Nut 184. Die beiden freien Schmalseiten können profillos bleiben und das Kemmaterial 12 kann offen liegen oder diese Schmalseiten können durch Profile geschlossen sein.

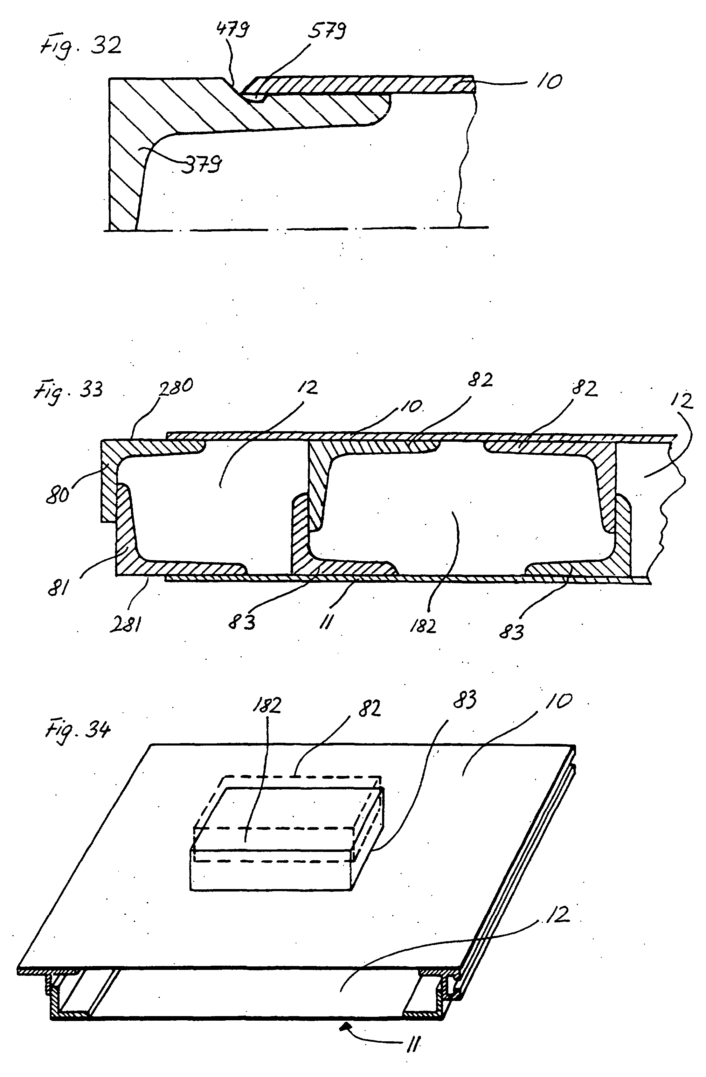

Die Figuren 30, 31 32 und 33 zeigen verschiedene Verbindungsmöglichkeiten zwischen den Deckschichten 10, 11 und den Profilen 77, 78, 79, 80 und 81. Beispielsweise kann gemäss Figur 30 die Deckschicht 10 resp. 11 an deren Aussenkante bündig mit dem Profil 77 resp. 78 abschliessen. Gemäss Figur 31 endet die Deckschicht 10 an einem Absatz 279 innerhalb des Schenkels 179 des Profiles 79. Der Tiefe des Absatzes 279 kann der Dicke der Deckschicht 10 entsprechen und so zu glatten Anschlüssen zwischen Deckschicht 10 und Randprofil 79 führen. Gemäss Figur 32 ist ein Absatz 479 im Schenkel, welcher der Deckschicht 10 zugewandt ist angebracht. Das Profil 379 weist im Bereich des Absatzes 479 eine Schweissbadstütze 579 auf. Eine metallische Deckschicht 10 kann durch ein Schweissverfahren, wie z.B. MIG-, TIG- oder Laserschweisen am metallischen Profil 379 festgelegt werden. Die Figur 33 zeigt eine weitere Variante der Verbindung von Deckschichten 10, 11 mit Profilen 80, 81, wobei die Deckschichten 10, 11 etwa mittig der Auflagefläche des einen Schenkels der L-förmigen Profile 80, 81 angeordnet sind und somit nur etwa die Hälfte der Auflageflächen 280, 281 beanspruchen.

In Figur 33 weist die Verbundplatte als weitere Ausführungsform beispielhaft Einlageprofile 82, 83 auf. An der oberen Deckschicht 10 sind die Einlageprofile 82 und an der unteren Deckschicht 11 die Einlageprofile 83 angebracht. Die beiden Einlageprofile 82 sind um die Profilschenkeldicke der Einlageprofile 83 und um ein kleines Spaltmass näher zueinander angeordnet. Beim Fügen der Deckschichten 10, 11 und insbesondere beim Verdichten des Kernmaterials 12 greifen die beiden Paare der Einlageprofile 82, 83 teleskopartig ineinander und bilden nach dem Verpressen eine kernmaterialfreie Zone 182. Die Einlageprofile können sich über die ganze Breite der Verbundplatte erstrecken oder können -- wie in Figur 34 gezeigt -- sich nur über eine Teilbreite und Teillänge der Verbundplatte erstrecken und eine isolierte kernmaterialfreie Zone 182 bilden.

Die Figur 34 zeigt eine Verbundplatte der gleichen Art, wie in Figur 29 dargestellt. Zwischen der oberen und unteren Deckschicht 10, resp. 11, und zwischen dem umgebenden Kernmaterial 12. An der oberen Deckschicht 10 ist eine Einlageprofil 82 und an der unteren Deckschicht 11 eine Einlageprofil 83 angebracht, wobei jedes der Einlageprofile 82, 83 eine ununterbrochene Seitenwand, hier beispielhaft in der Draufsicht in polygonaler und insbesondere Rechteckform, ausbilden. Das Einlageprofil 82 ist in seinen Massen um die Profilschenkeldicke des Einlageprofils 83 und um ein kleines Spaltmass kleiner als das Einlageprofil 83. Beim Fügen der Deckschichten 10, 11 und insbesondere beim Verdichten des Kernmaterials 12 greifen die Einlageprofile 82, 83 teleskopartig ineinander und bilden nach dem Verpressen eine kernmaterialfreie Zone 182. Die Einlageprofile 82, 83 können aus Einzelprofilen gestaltet werden oder es können anstelle von Einzelprofilen Profilteile oder Formstücke in Schachtel-, Glocken- oder Dosenform vorgesehen werden.

Vorliegende Erfindung betrifft auch ein Verfahren zur Herstellung von mehrschichtigen Verbundplatten, enthaltend äussere Deckschichten und einen aus in komprimiertem Zustande fixierten Kern aus schaumförmigem Material durch Vorlegen einer unteren Deckschicht, Zuführen einer Schicht eines granulierten schaumförmigen Materials zur Formung des Kernes und Anordnen einer oberen Deckschicht und anschliessendem Verpressen der Schichten unter Kompression oder Kompaktieren und gleichzeitiger bleibender Dickenreduktion des schaumförmigen Materials.

Erfindungsgemäss wird bei der Dickenreduktion ein Verdichtungsverhältnis von 3:1, zweckmässig von 2:1 bis 1,2:1, angewendet und die Deckschichten (10, 11) der Verbundplatte sind eine untere (10) und eine obere (11) Deckschicht und jede der Deckschichten (10, 11), jeweils auf der dem Kern (12) zugewandten Seite, enthält, einander gegenüberliegend, Profile (15, 16), die jeweils wenigstens einen, in einem Winkel von der Deckschicht abragenden, Profilsteg (315, 316) aufweisen und
- wobei jeder der Profilstege (315) wenigstens eine Seitenfläche (215), die einer Seitenfläche (216) des anderen Profilstegs (316) gegenüberliegt, aufweist, und die Seitenflächen (215, 216) in geringem Abstand, unter Ausbildung eines Spaltes, voneinander angeordnet sind, oder
- dass die beiden Profilstege (237, 238) einander gegenüberliegen und ein drittes bewegliches Element (39) den Abstand zwischen den Profilstegen (237, 238) überbrückt oder
- die beiden Profilstege (171, 172) durch ein drittes flexibles Element (73) über ihre ganze Länge spaltlos miteinander verbunden sind, und während des Verpressens wird ein Fliessen des schaumförmigen Materials über die durch die Profile gegebenen seitlichen Begrenzungen der Verbundplatte hinaus und/oder in isolierte Zonen .ohne Kernmaterial verhindert

Nach dem vorliegenden Verfahren bevorzugt hergestellte mehrschichtige Verbundplatten wurden obenstehend beschrieben.

Die vorliegenden mehrschichtigen Verbundplatten finden Verwendung als Konstruktionselemente für den Hochbau, Tiefbau oder Fahrzeugbau. Beispiele für solche Konstruktionselemente sind Wände, Böden, Decken, Türen, Zwischenwände, Trennwände, Faltwände, faltbare Schiebewände, Zwischenböden, Zwischendecken, Treppenstufen, Schachtverkleidungen oder Teile davon usw. in Bauwerken, wie Gebäuden. Weitere Beispiele sind Kofferaufbauten, Ladebrücken, Wände, Decken, Türen, Rolltore, Deckel, Verkleidungen usw. oder Teile davon, auf oder an Lastkraftwagen oder Eisenbahnwagen zum Gütertransport oder Wände, Decken, Böden, Zwischenwände, Verkleidungselemente, Türen, Deckel oder Teile davon, an Fahrzeugen zum Personentransport, wie Omnibussen, Strassenbahnen, Eisenbahnwagen oder auf Schiffen, wie Passagierschiffen, Fähren, Ausflugsdampfern oder -booten usw.

Bevorzugt ist die Verwendung von mehrschichtigen Verbundplatten enthaltend wenigstens ein funktionelles Profil als Teil eines roll- oder klappbaren Konstruktionselementes für den Hochbau, Tiefbau oder den Fahrzeugbau. Dabei kann das funktionelle Profil insbesondere Teil eines Schamieres sein. Entsprechend lassen sich die Verbundplatten in beispielsweise Rolltoren oder verschieb- und faltbaren Wänden verwenden.

## Patentansprüche

1. Mehrschichtige Verbundplatte enthaltend äussere Deckschichten und einen aus in komprimiertem Zustande fixierten Kern aus schaumförmigem Material
**dadurch gekennzeichnet, dass**
die Deckschichten (10, 11) der Verbundplatte eine untere (10) und eine obere (11) Deckschicht sind und jede der Deckschichten (10, 11), jeweils auf der dem Kern (12) zugewandten Seite, einander gegenüberliegend, Profile (15, 16) enthält, die jeweils wenigstens einen, in einem Winkel von der Deckschicht abragenden, Profilsteg (315, 316) aufweisen und
- wobei jeder der Profilstege (315) wenigstens eine Seitenfläche (215), die einer Seitenfläche (216) des anderen Profilstegs (316) gegenüberliegt, aufweist, und die Seitenflächen (215, 216) in geringem Abstand, unter Ausbildung eines Spaltes, voneinander angeordnet sind,
oder
- dass die beiden Profilstege (237, 238) einander gegenüberliegen und ein drittes bewegliches Element (39) den Abstand zwischen den Profilstegen (237, 238) überbrückt
oder
- die beiden Profilstege (171, 172) durch ein drittes flexibles Element (73) über ihre ganze Länge spaltlos miteinander verbunden sind,
und die Profile die seitlichen Begrenzungen des schaumförmigen Kernmaterials sind und/oder isolierte Zonen ohne schaumförmiges Kernmaterial begrenzen.

2. Mehrschichtige Verbundplatte nach Anspruch 1, **dadurch gekennzeichnet, dass** die Seitenflächen in einem Abstand angeordnet sind, unter Ausbildung eines Spaltes von bis zu 3 mm, zweckmässig 0,1 bis 3 mm und vorteilhaft 0,5 bis 1,5 mm.

3. Mehrschichtige Verbundplatte nach Anspruch 1, **dadurch gekennzeichnet, dass** Profilstege einander gegenüberliegender Profile kammartig ineinander greifen.

4. Mehrschichtige Verbundplatte nach Anspruch 1, **dadurch gekennzeichnet, dass** die Profilstege beider einander gegenüberliegender Profile (71, 72) durch ein drittes flexibles Element (74) in Form eines elastischen Verbindungselementes spaltlos miteinander verbunden sind.

5. Mehrschichtige Verbundplatte nach Anspruch 1, **dadurch gekennzeichnet, dass** wenigstens eines der einander gegenüberliegenden Profile ein funktionelles Profil ist oder beide Profile ein funktionelles Randprofil bilden.

6. Mehrschichtige Verbundplatte nach Anspruch 5, **dadurch gekennzeichnet, dass** das funtionelle Profil oder das funktionelle Randprofil eine Nut, eine hinterschnittene Nut, eine hinterschnittene Nut, wobei querschnittlich keilförmige Profilstreifen die Hinterschneidung bilden, eine Bohrung oder ein Scharnierteil aufweist.

7. Mehrschichtige Verbundplatte nach Anspruch 5, **dadurch gekennzeichnet, dass** beide Profile eine Verbindung von Nut oder Feder darstellen, eine gegenseitige Schnappverbindung sind oder eine Bohrung ausbilden.

8. Mehrschichtige Verbundplatte nach Anspruch 1, **dadurch gekennzeichnet, dass** wenigstens einer Seitenkante der Verbundplatte an den Deckschichten einander gegenüberliegend Profile angeordnet sind und die beiden Profile gemeinsam eine randständige Nut, eine randständige hinterschnittene Nut oder eine hinterschnittene Nut, wobei querschnittlich keilförmige Profilstreifen die Hinterschneidung bilden, formen.

9. Verfahren zur Herstellung von mehrschichtigen Verbundplatten enthaltend äussere Deckschichten und einen aus in komprimiertem Zustande fixierten Kern aus schaumförmigem Material durch Vorlegen einer unteren Deckschicht, Zuführen einer Schicht eines granulierten schaumförmigen Materials zur Formung des Kernes und Anordnen einer oberen Deckschicht und anschliessendem Verpressen der Schichten unter Kompression oder Kompaktieren und gleichzeitiger bleibender Dickenreduktion des schaumförmigen Materials,
**dadurch gekennzeichnet, dass**
bei der Dickenreduktion ein Verdichtungsverhältnis von 3.1, zweckmässig 2:1 bis 1,2:1, angewendet wird und die Deckschichten (10, 11) der Verbundplatte eine untere (10) und eine obere (11) Deckschicht sind und jede der Deckschichten (10, 11), jeweils auf der dem Kern (12) zugewandten Seite, einander gegenüberliegend, Profile (15, 16) enthält, die jeweils wenigstens einen, in einem Winkel von der Deckschicht abragenden, Profilsteg (315, 316) aufweisen und
- wobei jeder der Profilstege (315) wenigstens eine Seitenfläche (215), die einer Seitenfläche (216) des anderen Profilstegs (316) gegenüberliegt, aufweist, und die Seitenfläche (215, 216) in geringem Abstand, unter Ausbildung eines Spaltes, voneinander angeordnet sind,
oder
- dass die beiden Profilstege (237, 238) einander gegenüberliegen und ein drittes bewegliches Element (39) den Abstand zwischen den Profilstegen (237, 238) überbrückt
oder
- die beiden Profilstege (171, 172) durch ein drittes flexibles Element (73) über ihre ganze Länge spaltlos miteinander verbunden sind,
und während des Verpressens ein Fliessen des schaumförmigen Materials über die durch die Profile gegebenen seitlichen Begrenzungen der Verbundplatte hinaus und/oder in isolierte Zonen ohne Kernmaterial verhindert wird.

10. Verwendung der mehrschichtigen Verbundplatten, enthaltend äussere Deckschichten und einen aus in komprimiertem Zustande fixierten Kern aus schaumförmigem Material gemäss Anspruch 1 als Konstruktionselemente für den Hochbau, Tiefbau oder Fahrzeugbau.

11. Verwendung der mehrschichtigen Verbundplatten nach Anspruch 11, enthaltend wenigstens ein funktionelles Profil, als Teil eines roll- oder klappbaren Konstruktionselementes für den Hochbau, Tiefbau oder den Fahrzeugbau.

## Claims

1. Multi-layer composite panel containing outer layers and a core of foam-type material fixed in the compressed state, **characterised in that** the outer layers (10, 11) of the composite panel are a bottom layer (10) and a top layer (11) and each of the outer layers (10, 11) is provided on the side directed towards the core (12) with opposing profiles (15, 16) each having at least one web (315, 316) projecting at an angle from the outer layer, each of the profile webs (315) having at least one side face (215) situated opposite a side face (216) of the other profile web (316) and the side faces (215, 216) being arranged at a short distance from one another with the formation of a gap, or that the two profile webs (237, 238) are situated opposite one another and a third movable element (39) bridges the gap between the profile webs (237, 238), or the two profile webs (171, 172) are connected together without a gap over their entire length by a third flexible element (73), and the profiles are the lateral boundaries of the foam-type core material and/or delimit isolated zones without foam-type core material.

2. Multi-layer composite panel according to claim 1, **characterised in that** the side faces are arranged at a distance from one another, with the formation of gap of up to 3 mm, expediently 0.1 to 3 mm and advantageously 0.5 to 1.5 mm.

3. Multi-layer composite panel according to claim 1. **characterised in that** webs of opposing profiles mesh together.

4. Multi-layer composite panel according to claim 1, **characterised in that** the webs of the two opposing profiles (71, 72) are connected together without a gap by a third flexible element (74) in the form of an elastic connecting element.

5. Multi-layer composite panel according to claim 1, **characterised in that** at least one of the opposing profiles is a functional profile or the two profiles form a functional edge profile.

6. Multi-layer composite panel according to claim 5, **characterised in that** the functional profile or the functional edge profile has a groove, an undercut groove, an undercut groove in which profile strips having a wedge-shaped cross section form the undercut, a bore or a hinge part.

7. Multi-layer composite panel according to claim 5, **characterised in that** the two profiles form a key and slot joint, a mutual snap connection or a bore.

8. Multi-layer composite panel according to claim 1, **characterised in that** at least one side edge of the composite panei is arranged on the outer layers of opposing profiles and the two profiles together form an edge groove, an undercut edge groove or an undercut groove in which profile strips having a wedge-shaped cross section form the undercut.

9. Method of producing multi-layer composite panels containing outer layers and a core of foam-like material fixed in the compressed state by applying a bottom layer, supplying a layer of a granular, foam-like material to form the core, arranging a top layer thereon and then pressing the layers by compression or compaction with a simultaneous permanent reduction of the thickness of the foam-type material, **characterised in that** a compression ratio of 3:1, advantageously 2:1 to 1.2:1, is used in the thickness reduction, the outer layers (10, 11) of the composite panel are a bottom layer (10) and a top layer (11) and each of the outer layers (10, 11) is provided on the side directed towards the core (12) with opposing profiles (15, 16) each having at least one web (315, 316) projecting at an angle from the outer layer, each of the profile webs (315) having at least one side face (215) situated opposite a side face (216) of the other profile web (316) and the side faces (215, 216) being arranged at a short distance from one another with the formation of a gap, or that the two profile webs (237, 238) are situated opposite one another and a third movable element (39) bridges the gap between the profile webs (237, 238), or the two profile webs (171, 172) are connected together without a gap over their entire length by a third flexible element (73), and the foam-type material is prevented from flowing beyond the lateral boundaries of the composite panel determined by the profiles and/or into isolated zones without core material during the compression process.

10. Use of the multi-layer composite panels containing outer layers and a core of foam-type material fixed in the compressed state according to claim 1 as structural elements for building, civil engineering or vehicle construction.

11. Use of the multi-layer composite panels according to claim 11 containing at least one functional profile as part of a rolling or folding structural element for building, civil engineering or vehicle construction.

## Revendications

1. Panneau ou plaque composite à couches multiples, comprenant des couches de couverture extérieures et une âme en un matériau sous forme alvéolaire ou de mousse, qui est fixée dans l'état comprimé,
**caractérisé en ce que**
les couches de couverture (10, 11) du panneau composite sont une couche de couverture inférieure (10) et supérieure (11), et chacune des couches de couverture (10, 11) comporte respectivement sur sa face dirigée vers l'âme (12), de manière mutuellement opposée ou en regard, des profilés (15, 16) qui présentent chacun au moins une branche de profilé (315, 316) faisant saillie sous un certain angle de la couche de couverture, et
- chacune des branches de profilé (315) présentant au moins une surface latérale (215), qui est opposée ou en regard d'une surface latérale (216) de l'autre branche de profilé (316), et les surfaces latérales (215, 216) étant disposées à une faible distance l'une de l'autre en formant un interstice,
ou
- les deux branches de profilé (237, 238) sont opposées ou en regard l'une de l'autre et un troisième élément (39) mobile comble la distance entre les branches de profilé (237, 238),
ou
- les deux branches de profilé (171, 172) sont reliées l'une à l'autre sur toute leur longueur, sans interstice, par un troisième élément (73) flexible,
et les profilés sont les délimitations latérales du matériau de l'âme sous forme alvéolaire ou de mousse, et/ou délimitent des zones isolées sans matériau d'âme sous forme de mousse.

2. Panneau composite à couches multiples selon la revendication 1, **caractérisé en ce que** lesdites surfaces latérales sont disposées à distance l'une de l'autre en formant un interstice pouvant aller jusqu'à 3 mm, utilement compris entre 0,1 à 3 mm, et avantageusement compris entre 0,5 à 1,5 mm.

3. Panneau composite à couches multiples selon la revendication 1, **caractérisé en ce que** des branches de profilé de profilés mutuellement opposés, engrènent réciproquement à la manière d'un peigne.

4. Panneau composite à couches multiples selon la revendication 1, **caractérisé en ce que** des branches de profilé des deux profilés (71, 72) opposés l'un à l'autre sont reliées sans laisser d'interstice, par un troisième élément (74) flexible, sous la forme d'un élément de liaison élastique.

5. Panneau composite à couches multiples selon la revendication 1, **caractérisé en ce qu'**au moins l'un des profils opposés ou en regard est un profilé fonctionnel, ou les deux profilés forment un profilé de bordure fonctionnel.

6. Panneau composite à couches multiples selon la revendication 5, **caractérisé en ce que** le profilé fonctionnel ou le profilé de bordure fonctionnel présente une rainure, une rainure en contre-dépouille, une rainure en contre-dépouille, des bandes de profilé en forme de coin en section transversale formant la contre-dépouille, un alésage ou une partie de charnière.

7. Panneau composite à couches multiples selon la revendication 5, **caractérisé en ce que** les deux profilés représentent une languette ou rainure d'une liaison, sont une liaison réciproque par encliquetage, ou forment un alésage.

8. Panneau composite à couches multiples selon la revendication 1, **caractérisé en ce que** sur au moins un bord latéral du panneau composite, des profilés sont disposés de manière mutuellement opposée ou en regard, sur les couches de couverture, et les deux profilés forment en commun une rainure faisant office de bord, une rainure en contre-dépouille faisant office de bord, ou une rainure en contre-dépouille, des bandes de profilé en forme de coin en section transversale formant la contre-dépouille.

9. Procédé de fabrication de panneaux composites à couches multiples, comprenant des couches de couverture extérieures et une âme en un matériau sous forme alvéolaire ou de mousse, qui est fixée dans l'état comprimé, par la mise en place d'une couche de couverture inférieure, l'amenée d'une couche d'un matériau sous forme alvéolaire ou de mousse à l'état de granules pour former l'âme, et la disposition d'une couche de couverture supérieure, ces opérations étant suivies d'un pressage des couches par compression ou compactage avec réduction simultanée, permanente, de l'épaisseur du matériau sous forme de mousse,
**caractérise en ce que**
lors de la réduction d'épaisseur on met en oeuvre un rapport de compression de 3:1, avantageusement de 2:1 à 1,2:1, et les couches de couverture (10, 11) du panneau composite sont une couche de couverture inférieure (10) et supérieure (11), et chacune des couches de couverture (10, 11) comporte respectivement sur sa face dirigée vers l'âme (12), de manière mutuellement opposée ou en regard, des profilés (15, 16) qui présentent chacun au moins une branche de profilé (315, 316) faisant saillie sous un certain angle de la couche de couverture, et
- chacune des branches de profilé (315) présentant au moins une surface latérale (215), qui est opposée ou en regard d'une surface latérale (216) de l'autre branche de profilé (316), et les surfaces latérales (215, 216) étant disposées à une faible distance l'une de l'autre en formant un interstice,
ou
- les deux branches de profilé (237, 238) sont opposées ou en regard l'une de l'autre et un troisième élément (39) mobile comble la distance entre les branches de profilé (237, 238),
ou
- les deux branches de profilé (171, 172) sont reliées l'une à l'autre sur toute leur longueur, sans interstice, par un troisième élément (73) flexible,
et pendant le pressage, un écoulement du matériau d'âme sous forme alvéolaire ou de mousse est empêché au-delà des délimitations latérales du panneau composite données par les profilés et/ou dans des zones isolées sans matériau d'âme.

10. Utilisation des panneaux composites à couches multiples, comprenant des couches de couverture extérieures et une âme en un matériau sous forme alvéolaire ou de mousse, qui est fixée dans l'état comprimé, selon la revendication 1, en tant qu'élément de construction pour le bâtiment, le génie civil ou la construction automobile ou de véhicules.

11. Utilisation des panneaux composites à couches multiples, comprenant au moins un profilé fonctionnel, selon la revendication 1, en tant que partie d'un élément de construction roulant ou basculant pour le bâtiment, le génie civil ou la construction automobile ou de véhicules.
